# EUROPÄISCHE PATENTSCHRIFT

(11) **EP 4 474 669 B1**
(45) Veröffentlichungstag und Bekanntmachung des Hinweises auf die Patenterteilung: **11.03.2026**
(21) Anmeldenummer: 24175986.9
(22) Anmeldetag: 15.05.2024
(51) Int. Cl.: F16D 51/10, F16D 65/00

(54) **TROMMELBREMSE**
DRUM BRAKE
FREIN À TAMBOUR

(30) Priorität: 30.05.2023 DE 102023114079
(43) Veröffentlichungstag der Anmeldung: 11.12.2024
(73) Patentinhaber: KNORR-BREMSE Systeme für Nutzfahrzeuge GmbH, 80809 München (DE)
(72) Erfinder: Weber, Ralf, 80997 München (DE); Iraschko, Johann, 85301 Schweitenkirchen (DE); Buch, Andreas, 82024 Taufkirchen (DE); Riba, Zoltán, 82152 Planegg (DE); Akbalik, Erkan, 81245 München (DE); Rguichi, Abdelaziz, 82140 Olching (DE); Werth, Alexander, 80999 München (DE); Fischer, Rudolf, 85435 Erding (DE)

(56) Entgegenhaltungen:
- DE-B3- 102021 115 785
- US-A- 3 853 207
- US-A- 4 350 230
- US-A1- 2011 233 010
- US-A1- 2019 128 350
- US-A1- 2023 159 006
- US-B2- 12 054 004

## Beschreibung

Die Erfindung betrifft eine Trommelbremse gemäß dem Oberbegriff des Anspruchs 1.

Gattungsgemäße Trommelbremsen weisen einen zylindertrommelförmigen Rotor auf, mit einer Innenseite des auch als Bremstrommel bezeichneten Rotors angeordneten Reibflächen. Eine Bremskraft wird dabei mit Bremsbelägen generiert, die gegen die innenliegende Reibfläche der Bremstrommel gedrückt werden.

Da sich die Umweltanforderungen und sich damit ändernde gesetzliche Grundlagen in Zukunft erhöhte Anforderungen zur Vermeidung von Feinstaub mit sich bringen werden, ist es wünschenswert, technische Lösungen für Reibbremsen für Nutzfahrzeuge zu entwickeln, die in der Lage sind, Bremsstaub, insbesondere den Feinstaubanteil von Bremsstaub, zu minimieren und idealerweise dessen Emission in die Umgebung zu verhindern.

Hier weisen Trommelbremsen den Vorteil auf, dass diese leicht zu kapseln sind, was bei Reibbremsen in Form von Scheibenbremsen äußerst schwierig ist.

Da aufgrund der rotatorischen Relativbewegung auch bei der Trommelbremse zwangsläufig Spaltmaße auftreten, können durch diese Spalte weiterhin Partikel, insbesondere im Nanometerbereich austreten.

Die hierzu vorliegenden technischen Lösungen, die sich derzeit in erster Linie auf den PKW-Bereich konzentrieren, sind weitgehend darauf angelegt den entstehenden Bremsstaub im Innenraum der Trommelbremse zu sammeln und/oder mit oder ohne Hilfe von Luftdruck durch einen Filter zu leiten und dort zu sammeln.

Eine gattungsgemäße Trommelbremse ist beispielsweise aus der DE 10 2016 117 778 A1 oder aus der US 2019/128350 A1 bekannt. Bei dieser Trommelbremse ist eine offene Stirnseite der Bremstrommel mit einer Abdeckung abgedeckt, die wenigstens eine Öffnung aufweist, in die mit einer Entstaubungseinheit versehene Saugeinrichtung angeschlossen ist. Eine solche Trommelbremse hat sich an sich in der Praxis bewährt.

Aufgabe der vorliegenden Erfindung ist es, eine Trommelbremse mit nochmals verbesserter Bremsstaubabsaugung bereitzustellen.

Diese Aufgabe wird durch eine Trommelbremse mit den Merkmalen des Anspruchs 1 gelöst.

Die erfindungsgemäße Trommelbremse, insbesondere für ein Nutzfahrzeug, weist eine um eine Drehachse drehbar gelagerte Bremstrommel auf. Die Trommelbremse weist des Weiteren mehrere in einem Aufnahmeraum der Bremstrommel gelagerte Bremsbeläge mit einem jeweiligen Reibbelagträger und einem an diesem angeordneten Reibbelag auf.

An einem Ankergehäuse der Trommelbremse ist eine Zuspanneinrichtung drehfest angeordnet, mit der die Bremsbeläge an eine als Reibfläche ausgebildete Mantelinnenfläche der Bremstrommel anpressbar sind.

An oder nahe jedem der Bremsbeläge entlang zumindest eines Teilstücks eines Umfangsrandes des jeweiligen Reibbelags ist ein an eine Saugeinrichtung anschließbares Saugrohr angeordnet.

Mit einer solchermaßen ausgebildeten Trommelbremse ist nunmehr eine Absaugung von Bremsstaub direkt an der Kontaktfläche der Reibpaarung ermöglicht.

Darüber hinaus schützt die Bremstrommel die Absaugschnittstelle zwischen Reibbelag und Bremstrommel vor Umwelteinflüssen, wie beispielsweise Anhaftungen durch Schmutz, Schlamm, Splitt, Steinschlag, Vereisung und darin enthaltenen Sedimentablagerungen.

Vorteilhafte Ausführungsvarianten der Erfindung sind Gegenstand der Unteransprüche.

Gemäß einer vorteilhaften Ausführungsvariante ist an jedem der Bremsbeläge entlang eines Umfangsrandes ein an eine Saugeinrichtung anschließbares Saugrohr angeordnet, das mit einer Reibfläche der Bremsbeläge abschließt und beim Andrücken der Bremsbeläge zusammen mit der Reibfläche der Bremsbeläge an der Mantelinnenfläche der Bremstrommel anliegt.

Durch die Anbindung des Saugrohrs an oder nahe den Bremsbelägen lassen sich auch die Saugrohre in einfacher Weise zusammen mit den Bremsbelägen austauschen.

**In** einer alternativen Ausführungsvariante ist mindestens ein Saugrohr nahe einem Seitenrand der Mantelinnenfläche der Bremstrommel zugewandt unterhalb eines Abdeckblechs des Gehäuses der Trommelbremse angeordnet.

Auch mit einem solchermaßen angeordneten wenigstens einen Saugrohr ist eine zuverlässige Absaugung des bei Bremsvorgängen entstehenden Bremsstaubes ermöglicht.

Gemäß einer vorteilhaften Weiterbildung ist wenigstens ein Ende des Saugrohrs mit einer Anschlussschnittstelle zum Anschluss an die Saugeinrichtung verbunden.

In einer ersten bevorzugten Ausführungsvariante sind beide Enden des Saugrohrs mit der Anschlussschnittstelle verbunden.

In einer alternativen Ausführungsvariante ist genau eines der Enden des Saugrohrs mit der Anschlussschnittstelle verbunden.

Gemäß einer weiteren vorteilhaften Ausführungsvariante ist die Anschlussschnittstelle als Tülle ausgebildet. Diese kann in einfacher Weise an einem Gehäuse der Trommelbremse befestigt und je nach Anschlussstelle geschweißt, verschraubt oder auch eingepresst werden.

Die Anschlussschnittstelle kann dabei insbesondere in jeglicher handelsüblichen Form eines Schlauchanschlusses ausgeführt sein, beispielsweise in Gestalt einer Steckverbindung, Kupplung oder dergleichen.

Zur Fixierung des Saugrohrs am Bremsbelag sind gemäß einer vorteilhaften Ausführungsvariante Führungsstifte am Saugrohr angebracht, die in Tellerfedern einseitig verschiebbar gelagert sind.

Diese Tellerfedern sind bevorzugt in jeweiligen Taschen im Reibbelagträger des Reibbelags in Achsrichtung des Führungsstiftes fixiert.

Gemäß einer weiteren vorteilhaften Ausführungsvariante ist ein Formschluss zwischen Führungsstift und Tellerfeder so ausgelegt, dass der Führungsstift in Richtung seiner Längsachse durch die Tellerfeder, mittels der Anpresskraft der Bremsbeläge, unidirektional in Verschleißrichtung und planparallel zur Reibfläche der Bremsbeläge verschiebbar ist.

Das Saugrohr ist gemäß einer weiteren vorteilhaften Ausführungsvariante am Reibbelag als austauschbare Einheit befestigt. Weiter ist bevorzugt die Anschlussschnittstelle als austauschbare Einheit an einem Abdeckblech eines Gehäuses der Trommelbremse befestigt.

Diese Austauschbarkeit ermöglicht einen modularen Aufbau der Trommelbremse, der je nach gesetzlicher Anforderung stufenweise ausgebaut werden kann.

Das Saugrohr ist gemäß einer vorteilhaften Ausführungsvariante zumindest teilflächig mit einem Abstreifer ummantelt.

Dadurch wird ein Abschleifen des Saugrohrs während des Bremsvorgangs wirksam verhindert.

Der Abstreifer besteht dabei bevorzugt aus einem hochfesten, temperaturbeständigen Gewebe.

Das Gewebe ist dabei insbesondere ein Glasfaser-, CFC-, Silikat- oder Keramikgewebe mit einer Temperaturbeständigkeit von mehr als 650°C, bevorzugt von bis zu 1200°C.

In einer alternativen Ausführungsvariante ist das Saugrohr zumindest teilflächig mit einer Keramikbeschichtung versehen.

In einer weiteren alternativen Ausführungsvariante sind an dem Saugrohr bevorzugt Abstandshalter befestigt, um einen vorzeitigen Verschleiß bei Bremsvorgängen vorzubeugen.

Das Saugrohr weist gemäß einer vorteilhaften Ausführungsvariante Absaugöffnungen auf, die mit einem geringen Spalt zur Kontaktfläche des Reibbelags zur Mantelinnenfläche der Bremstrommel angebracht sind.

Gemäß einer weiteren vorteilhaften Ausführungsvariante ist die Schnittstelle des Saugrohrs zur Anschlussschnittstelle mit einem Längen-, Höhen- und Winkelausgleich versehen.

Die Schnittstelle ist dabei besonders bevorzugt als flexibler Balg, insbesondere als Metallfaltenbalg ausgebildet.

In einer vorteilhaften Weiterbildung ist zur Befestigung des Saugrohrs am Balg einerseits und des Balgs in der Anschlussschnittstelle andererseits eine geschlitzte Buchse in den Verbindungsenden des Balgs derart umspritzt, dass das die geschlitzte Buchse ummantelnde Material, bevorzugt NBR oder Silikon, eine Abdichtung der Anschlüsse Saugrohr zu Balg und Anschlussschnittstelle zu Balg bildet.

Nachfolgend werden bevorzugte Ausführungsbeispiele anhand der beiliegenden Zeichnungen näher erläutert. Es zeigen:
- Fig. 1: eine schematische perspektivische Ansicht einer Ausführungsvariante einer erfindungsgemäßen Trommelbremse mit einer Mehrzahl von Bremsbelägen ummantelnder Bremstrommel,
- Fig. 2: eine der Figur 1 entsprechende Darstellung der Trommelbremse mit ausgeblendeter Bremstrommel zur Darstellung der Bremsbeläge,
- Fig. 3: eine Schnittdarstellung durch die in Figur 1 gezeigte Trommelbremse,
- Fig. 4: eine isometrische Darstellung eines Bremsbelags der Trommelbremse,
- Fig. 5: eine Explosionsdarstellung des in Figur 4 gezeigten Bremsbelags,
- Fig. 6: eine Schnittdarstellung durch den in Figur 4 gezeigten Bremsbelag,
- Fig. 7: eine Schnittdarstellung einer als Tülle ausgebildeten Anschlussschnittstelle,
- Fig. 8 a) - c): unterschiedliche Darstellungen eines Bals mit darin angeordneter geschlitzter Buchse,
- Fig. 9: eine Schnittansicht durch einen Führungsstift zur Fixierung des Saugrohrs am Bremsbelag,
- Fig. 10: eine Draufsicht auf eine Tellerfeder zur Fixierung des Führungsstifts am Bremsbelag,
- Fig. 11 a) - c): unterschiedliche Ausführungsvarianten eines Saugrohrs,
- Fig. 12: eine Ausführungsvariante einer mit Bremsbelägen versehenen Unterbaugruppe einer mit sogenannten S-Nocken betätigbaren Trommelbremse,
- Fig. 13: eine Seitenansicht auf die Unterbaugruppe gemäß Figur 12,
- Fig. 14: eine Draufsicht auf die Unterbaugruppe gemäß Figur 12,
- Fig. 15: eine Schnittdarstellung durch einen Ausschnitt der Trommelbremse mit Bremsbelag und Zuspanneinrichtung zur radialen Auslenkung der Bremsbeläge und Führung der Bremsbeläge mittels Führungsstiften,
- Fig. 16: eine Frontansicht auf eine durch Hinterschnitt klemmbare Bremsbeläge,
- Fig. 17: eine Schnittdarstellung durch eine weitere Ausführungsvariante einer erfindungsgemäßen Trommelbremse mit ringförmiger Absaugung,
- Fig. 18: eine Seitenansicht auf die Trommelbremse mit seitlich und innerhalb der Bremstrommel angeordnetem Absaugring,
- Fig. 19 und Fig. 20: Teil-Explosionsdarstellungen zweier Varianten von Trommelbremsen mit einem bzw. mehreren Saugrohren und
- Fig. 21 und Fig. 22: unterschiedliche Ausführungsvarianten von in den Figuren 19 und 20 eingesetzten Saugrohren.

In der der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Trommelbremse, Bremstrommel, Bremsbelag, Saugrohr, Anschlussschnittstelle und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

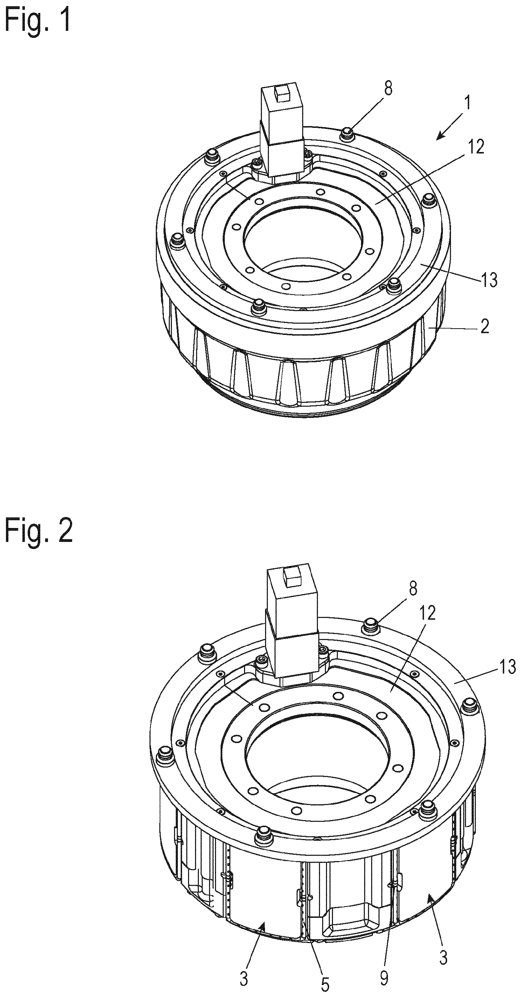

In **Figur 1** ist mit dem Bezugszeichen 1 insgesamt eine Ausführungsvariante einer erfindungsgemäßen Trommelbremse bezeichnet. Die Trommelbremse 1 weist einen um eine Drehachse D drehbar gelagerte Bremstrommel 2 auf, die über ein Gehäuse 12 drehfest mit einer hier nicht dargestellten Nabe, vorzugsweise eines Nutzfahrzeugs, verbunden ist.

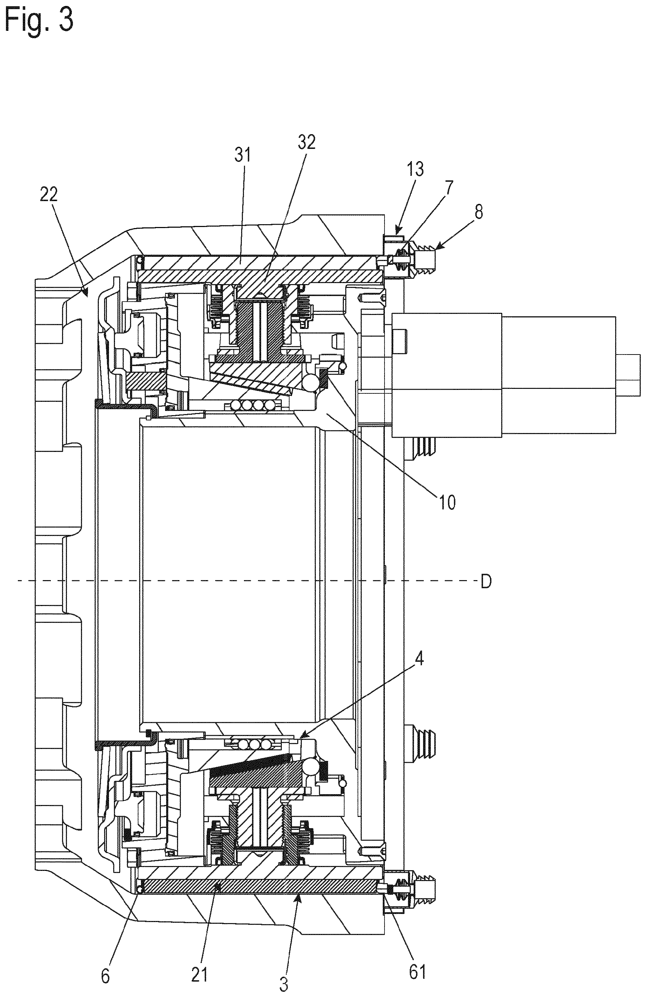

In einem Raum radial innerhalb der Bremstrommel 2 sind mehrere in einem Aufnahmeraum 22 der Bremstrommel 2 gelagerte Bremsbeläge 3 mit einem jeweiligen Reibbelagträger 32 und einem an diesem angeordneten Reibbelag 31 angeordnet. Die Bremsbeläge 3 sind dabei mit ihren Reibbelägen 31 einer Mantelinnenfläche 21 der Bremstrommel 2 zugewandt angeordnet, wie es beispielhaft in den **Figuren 2** **und** **3** dargestellt ist.

An einem Ankergehäuse 10, beispielhaft dargestellt in Figur 3, sind mehrere Zuspanneinrichtungen 4 drehfest angeordnet, mit der die Bremsbeläge 3 an die als Reibfläche ausgebildete Mantelinnenfläche 21 der Bremstrommel 2 anpressbar sind.

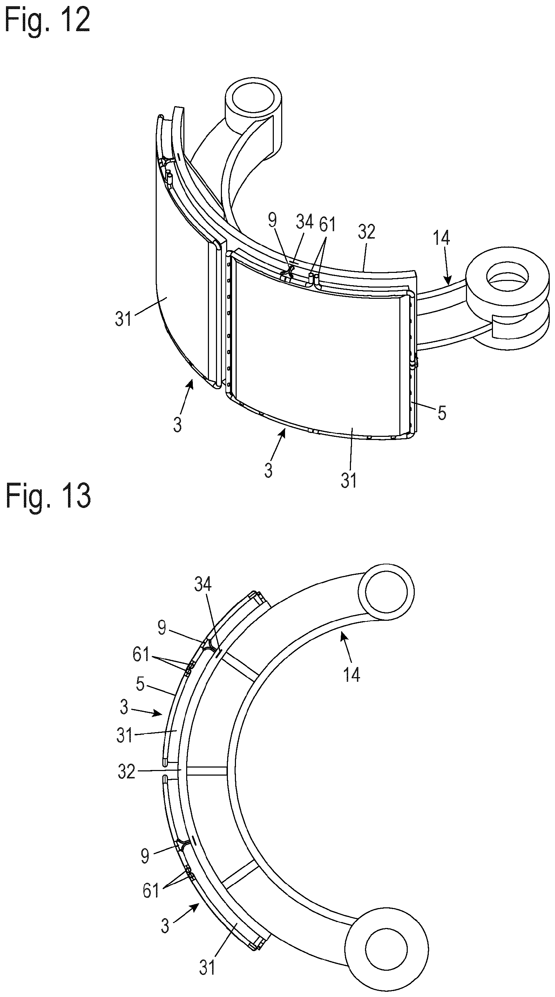

Während bei der in Figur 3 gezeigten Ausführungsvariante die Zuspanneinrichtung 4 so ausgeführt ist, dass die Bremsbeläge radial zur Drehachse D in Richtung der Mantelinnenfläche 21 der Bremstrommel 2 bewegbar sind, ist es auch denkbar, die Bremsbeläge, wie es in den **Figuren 12 bis 14** dargestellt ist, an einer, vorzugsweise zwei Unterbaugruppen 14 anzuordnen, die über einen sogenannten S-Nocken gegen die Mantelinnenfläche 21 der Bremstrommel 2 verschwenkbar ist, wie es bei sogenannten Simplex-Trommelbremsen der Fall ist.

Hier wird die Zuspanneinrichtung durch den S-Nocken und die durch diesen bewegbare Unterbaugruppe gebildet.

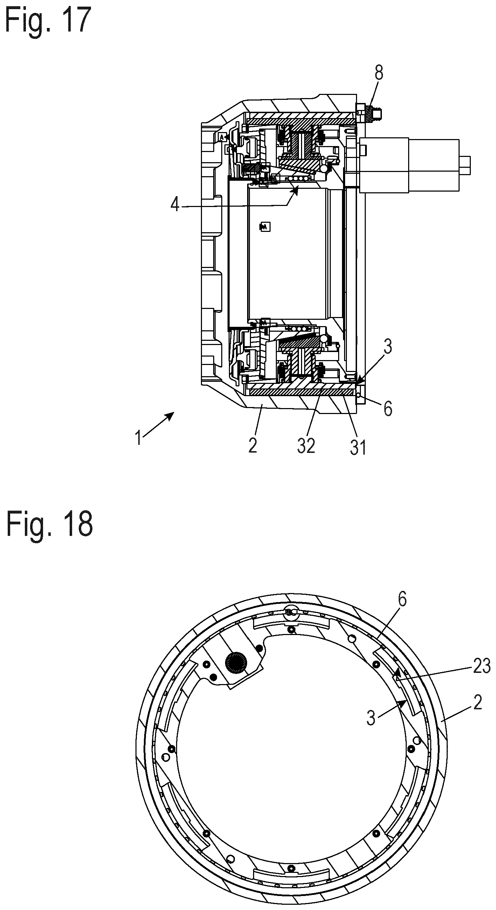

Wie weiter in den **Figuren** 2, 3, **4, 5****,** 12 **und** **17 bis 20** gezeigt ist, ist an oder nahe jeder der Bremsbeläge 3 entlang zumindest eines Teilstücks eines Umfangsrandes des jeweiligen Reibbelags 31 ein an eine Saugeinrichtung anschließbares Saugrohr 6 angeordnet.

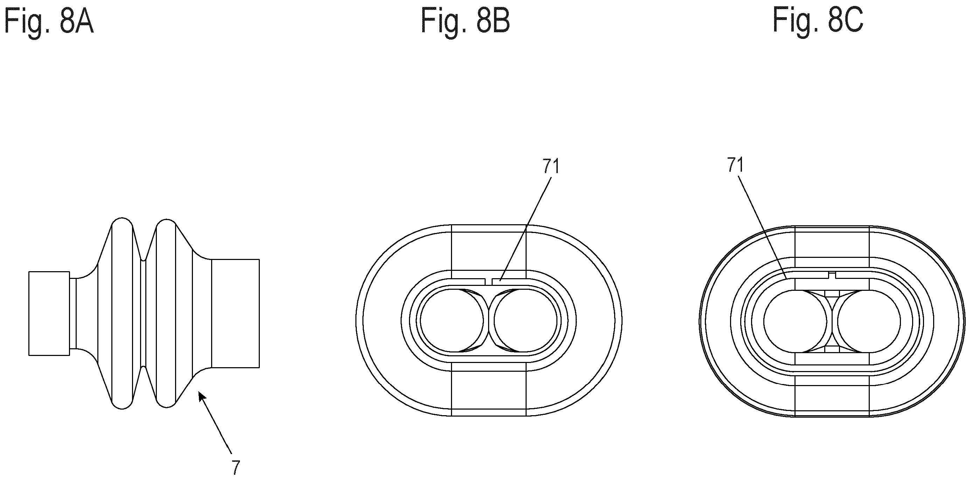

Bei einer ersten Ausführungsvariante einer erfindungsgemäßen Trommelbremse, gezeigt in den **Figuren 1 bis 11** sowie einer zweiten Ausführungsvariante, gezeigt in den **Figuren 12 bis 16****,** ist an jedem der Bremsbeläge 3 genau ein Saugrohr 6 angeordnet, das mit einer Reibfläche 33 des jeweiligen Bremsbelags 2 abschließt und beim Andrücken der Bremsbeläge 3 zusammen mit der Reibfläche 33 der Bremsbeläge 3 an der Mantelinnenfläche 21 der Bremstrommel 2 anliegt.

Bei einer dritten Ausführungsvariante einer erfindungsgemäßen Trommelbremse ist das mindestens ein Saugrohr 6 nahe eines Seitenrandes 23 der Mantelinnenfläche 21 der Bremstrommel 2 zugewandt unterhalb eines Abdeckblechs 13 des Gehäuses 12 der Trommelbremse 1 angeordnet.

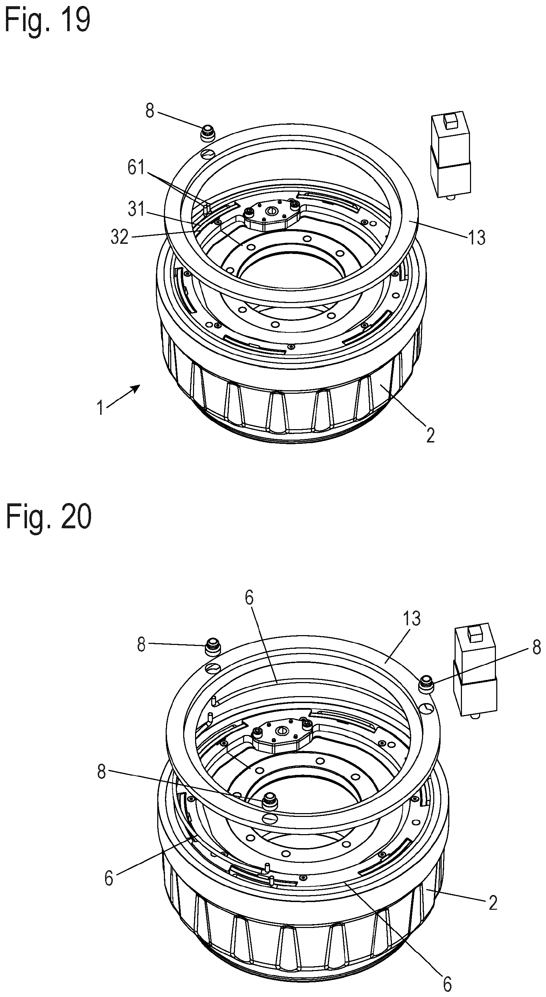

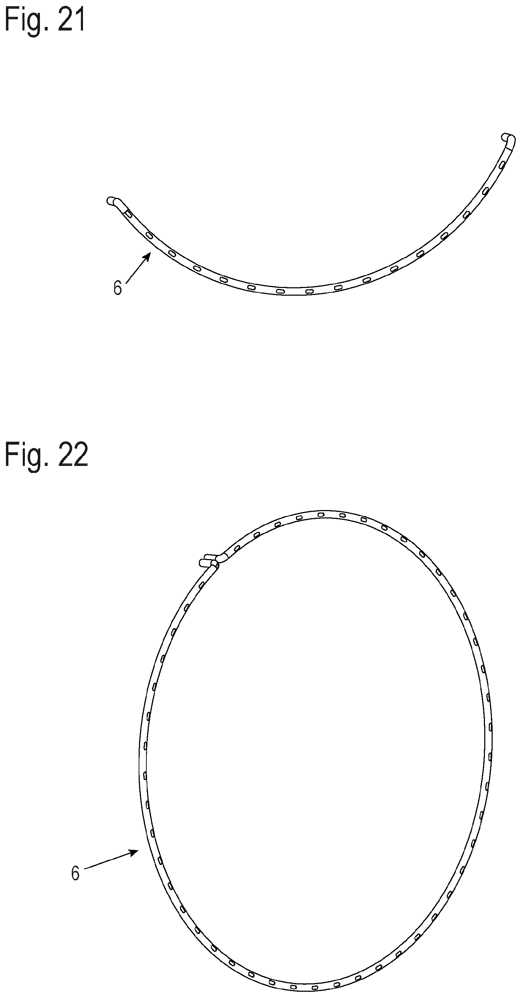

Bei der in Figur 19 gezeigten Ausführungsvariante ist genau ein solches Saugrohr 6, kreisringförmig ausgebildet, wie es in Figur 22 dargestellt, unterhalb des Abdeckblechs 13 festgelegt.

Bei der in Figur 20 gezeigten Ausführungsvariante sind beispielhaft drei solcher Saugrohre 6, wie sie in Figur 21 als Einzeldarstellung gezeigt sind, unterhalb des Abdeckblechs 13 des Gehäuses 12 der Trommelbremse 1 angeordnet.

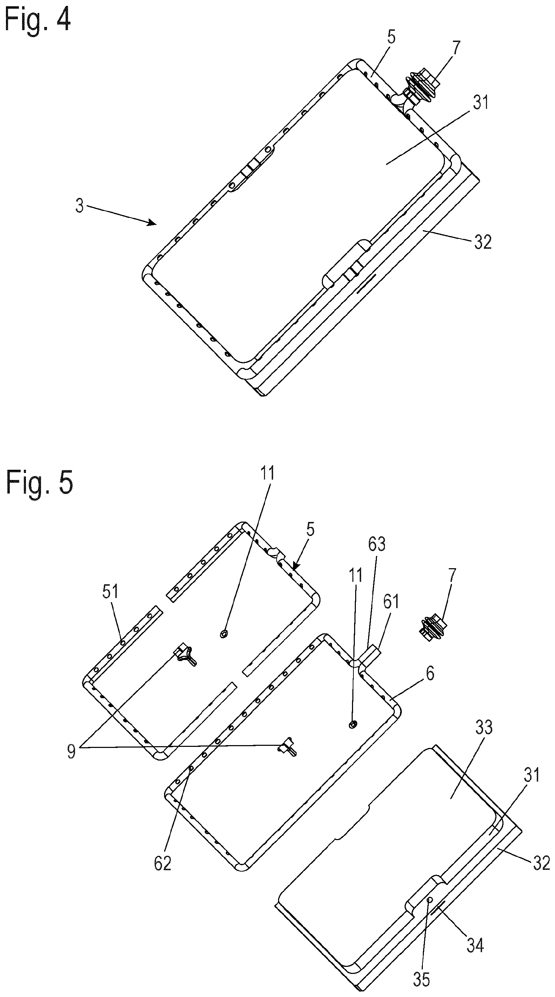

Das Saugrohr 6 bildet dabei vorzugsweise einen Kreislauf, der an einer Anschlussschnittstelle 8 zum Anschluss an die Saugeinrichtung mit seinen beiden Enden 61 verbunden ist, wie es beispielhaft in Figur 4 dargestellt ist.

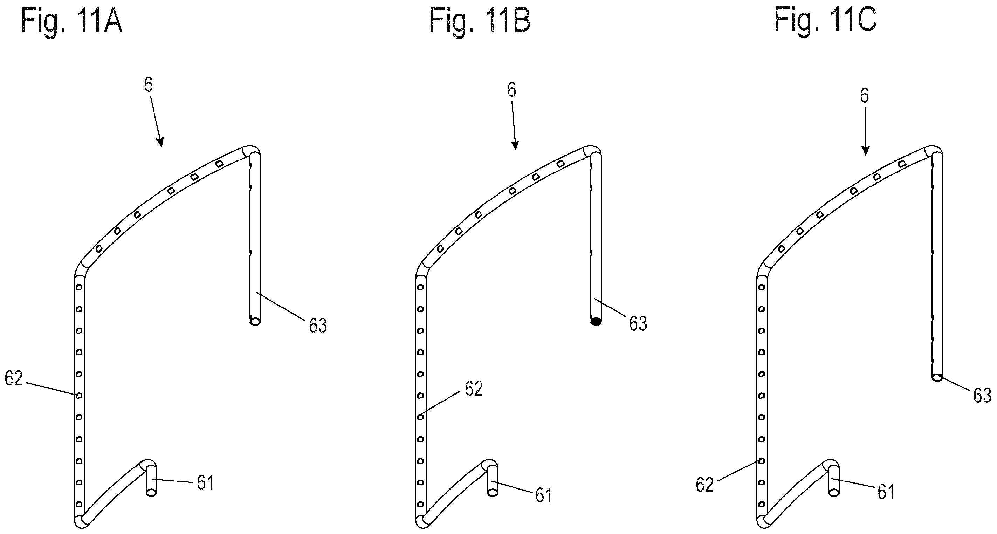

Sofern die Geometrie des Endes 61 des jeweiligen Saugrohrs 6 zur Absaugung und/oder Druckregulierung genutzt wird, wie es in den Figuren 11a, 11b und 11c dargestellt ist, wird entsprechend nur eines der Enden 61 des Saugrohrs 6 mit Unterdruck beaufschlagt.

Das andere Ende 63 des Saugrohrs 6 weist bei der in Figur 11a gezeigten Ausführungsvariante eine Blende auf.

Bei der in Figur 11b gezeigten Ausführungsvariante ist in das andere Ende 63 ein Schalldämpfer eingesetzt.

Bei der in Figur 11c gezeigten Ausführungsvariante ist das andere Ende 63 als Verlängerungsrohrstück ausgebildet (Durch die Länge des Rohrstücks kann der Druckabfall der Strömung im Rohr angepasst werden.)

Die Anschlussschnittstelle 8 bzw. die mehreren Anschlussschnittstellen 8 sind bevorzugt als Tülle ausgebildet, die eine Schnittstelle zur Absaug- und gegebenenfalls Filteranlage bildet. Neben der Ausführungsvariante als Tülle sind dabei auch andere handelsübliche Formen für Schlauchanschlüsse denkbar, beispielsweise Steckverbindungen, Kupplungen, etc.

Um zu gewährleisten, dass die Saugrohre 6 stets direkt an der Kontaktfläche der Reibpaarung, sprich der Reibbeläge 31 und der Mantelinnenfläche 21 der Bremstrommel 2, anliegen, jedoch beim Lösen der Trommelbremse 1 nicht mehr an der Mantelinnenfläche 21 der Bremstrommel 2 schleifen, sind die Saugrohre 6 bevorzugt so angeordnet, dass diese mit der Reibfläche 33 der Reibbeläge 3 mitwandern.

Dazu sind, wie in den Figuren 4 bis 6 beispielhaft dargestellt, am Saugrohr 6 Führungsstifte 9 angebracht, die in Tellerfedern 11 einseitig verschiebbar gelagert sind. Die Tellerfedern 11 sind dabei bevorzugt in einer Tasche 34 im Reibbelagträger 32 des Bremsbelags 3 in Achsrichtung der Führungsstifte 9 fixiert.

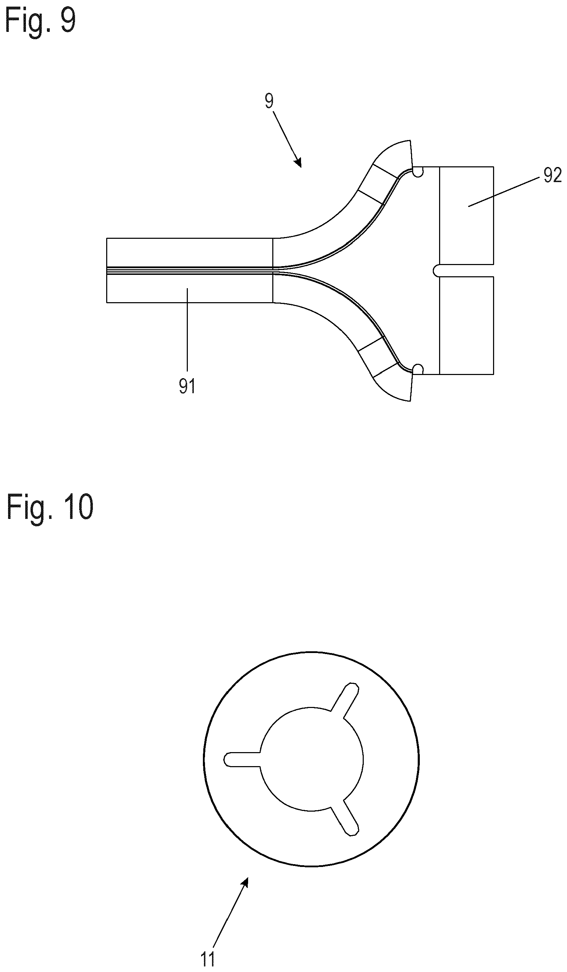

Wie in Figur 9 gezeigt ist, weist jeder der Führungsstifte 9 dazu ein Einsteckstück 91 auf, das in eine Stiftaufnahme 35 im Reibbelagträger 32 des Bremsbelags 3 einsteckbar ist. Ein Biegestück 92, hier als biegbares Blechstück ausgebildet, wird dabei nach Anlegen des Saugrohrs 6 um einen Umfangsabschnitt des Saugrohrs 6 herum angedrückt.

Ein Formschluss zwischen Führungsstift 9 und Tellerfeder 11 ist dann bevorzugt so ausgelegt, dass der Führungsstift 9 in Richtung seiner Längsachse durch die Tellerfeder 11, mittels der Anpresskraft der Bremsbeläge 3, unidirektional in Verschleißrichtung und planparallel zur Reibfläche 33 der Bremsbeläge 3, verschiebbar ist.

In der Gegenrichtung klemmt die Tellerfeder 11 den Führungsstift 9, in dem durch Reibung die Kante der Tellerfeder 11 in den äußeren Umfang des Führungsstiftes 9 gedrückt wird.

Das Saugrohr 6 ist dabei am jeweiligen Reibbelag bevorzugt als austauschbare Einheit befestigt.

Weiter ist auch die wenigstens eine Anschlussschnittstelle 8 als austauschbare Einheit an dem Abdeckblech 13 des Gehäuses 12 der Trommelbremse 1 befestigt.

Das Saugrohr 6 ist, wie insbesondere in Figur 5 gezeigt ist, zumindest teilflächig mit einem Abstreifer 5 ummantelt.

Denkbar ist auch, bei entsprechend großer Saugleistung, den Abstreifer 5 durch punktuelle Abstandshalter zu ersetzen.

Dieser Abstreifer 5 dient dabei der Verhinderung eines vorzeitigen Verschleißes des Saugrohrs 6 und auch dessen Dämpfung, insbesondere zur Verhinderung von Geräuschen, die ein in Schwingung versetztes Saugrohr 6 verursachen könnte.

Der Abstreifer 5 besteht bevorzugt aus hochfestem, temperaturbeständigem Gewebe. Ein solches Gewebe kann je nach Gewebetyp Temperaturen von größer 650°C bis kleiner 1200°C standhalten. Als Materialien kommen hier insbesondere Glasfaser-, CFC-, Silikat- oder Keramikgewebe infrage.

Anstelle eines Keramikgewebes ist es auch denkbar, das Saugrohr 6 zumindest teilflächig mit einer Keramikbeschichtung zu versehen.

Bei der Ausführungsvariante des Abstreifers 5 als Gewebe kann dieses bevorzugt umlaufend vernäht oder beispielsweise mittels Klammern am Saugrohr 6 befestigt werden.

Das Saugrohr 6 weist Absaugöffnungen 61 auf, die bevorzugt mit einem geringen Spalt zur Kontaktfläche des Reibbelags 31 zur Mantelinnenfläche 21 der Bremstrommel 2 angebracht sind.

Insbesondere durch den über das Saugrohr überstülpten Abstreifer kann der Spalt nahezu gegen Null gehen. Die Position, Form und Größe der Sauglöcher 62 werden bevorzugt mittels CFD-Simulation (CFD: computational fluid dynamics) so ausgelegt, dass ein maximaler Absaugeffekt an der Stelle der größten Bremsstaubentwicklung erzielt wird.

Das Saugrohr 6 ist bevorzugt über einen Längen-, Höhen- und Winkelausgleichselement mit der Anschlussschnittstelle 8 verbunden. Dieses Längen-, Höhen- und Winkelausgleichselement ist bevorzugt als flexibler Balg 7 ausgebildet, wie er beispielsweise in den Figuren 4, 5 und 8a und 8b gezeigt ist.

Als Material für diesen Balg 7 wird vorzugsweise NBR oder Silikon verwendet. Da an der Position des Balgs 7 durch die Charakteristik der Trommelbremse 1 noch sehr hohe Temperaturen vorherrschen, ist der Balg 7 bevorzugt entweder gegen die hohen Temperaturen abgeschirmt oder räumlich entfernt gelagert.

Aufgrund der geringen Ausgleichsmaße (kompensiert werden müssen nur das Lüftspiel, Ausdehnung durch Temperatur und Verschleiß der Trommelreibfläche) ist es alternativ auch denkbar, den Balg 7 als Metallfaltenbalg auszubilden.

Zur Befestigung des Saugrohrs 6 am Balg 7 einerseits und des Balgs 7 in der Anschlussschnittstelle 8 andererseits ist bevorzugt in dem Balg 7 eine geschlitzte Buchse 71 vorgesehen und in den Verbindungsenden des Balgs 7 derart umspritzt, dass das die geschlitzte Buchse 71 ummantelnde Material eine Abdichtung der Anschlüsse Saugrohr 6 zu Balg 7 und Anschlussschnittstelle 8 zu Balg 7 bildet.

So ist gewährleistet, dass der Balg 7, der bei appliziertem Saugdruck zusammengezogen wird, sich an das Saugrohr 6 anlegen kann, ohne dabei die Öffnung zur hier als Tülle ausgebildeten Anschlussschnittstelle 8 zu verschließen.

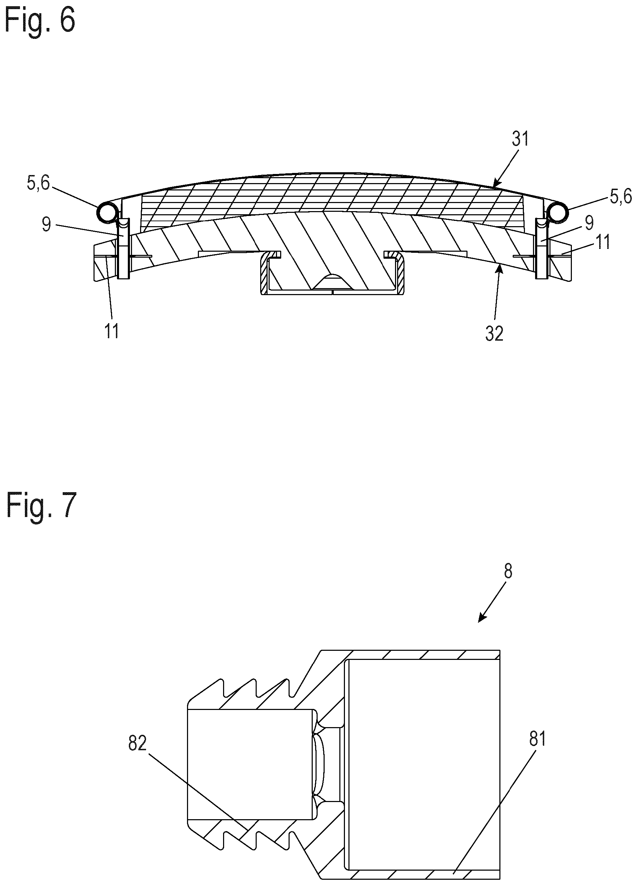

Die in Figur 7 gezeigte Anschlussschnittstelle 8 besteht dabei im Wesentlichen aus einem den Balg 7 aufnehmenden ersten Anschlussstück 81, hier in Gestalt einer topfzylindrischen Aufnahmeöffnung mit Durchgangsöffnung am Boden und einem zweiten Anschlussstück 82, auf das das Schlauchende der Saugeinrichtung (nicht gezeigt) aufsteckbar ist.

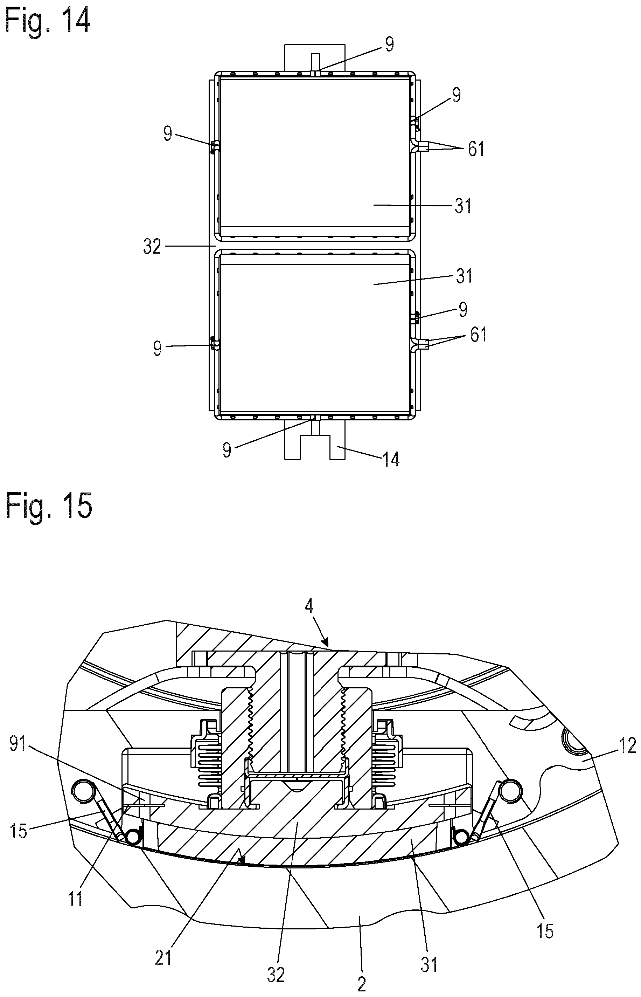

Bei der in Figur 15 gezeigten Ausführungsvariante, bei der der Bremsbelag 3 radial zur Drehachse D gegen die Mantelinnenfläche 21 der Bremstrommel 2 drückbar ist, ist das Saugrohr 6 starr an das Gehäuse 12 angebunden, hier mithilfe von Führungsstiften 15.

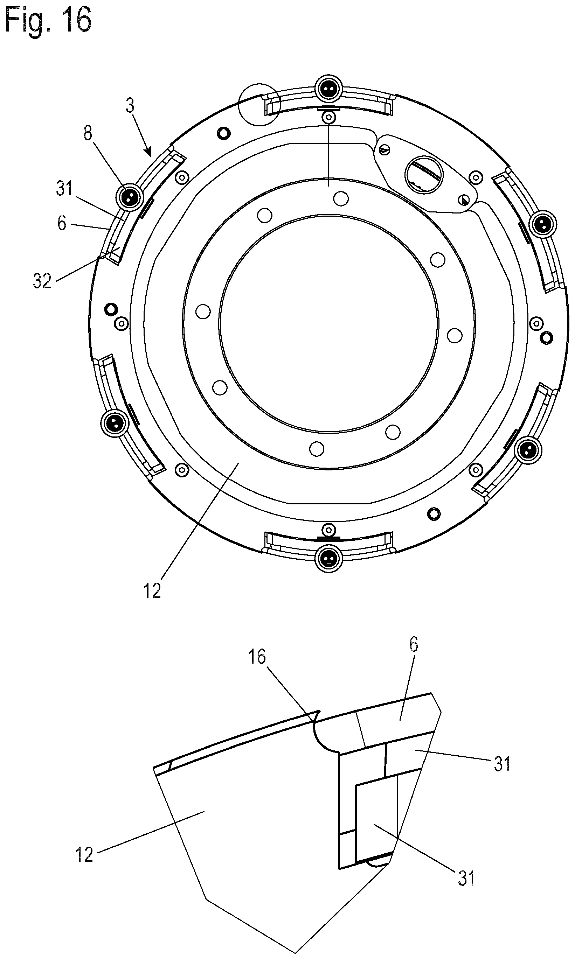

Bei der in Figur 16 gezeigten Ausführungsvariante erfolgt die Anbindung des Saugrohrs 6 durch eine Klemmkraft des durch seine Länge leicht flexiblen Saugrohrs 6 in einen maschinell gefertigten Hinterschnitt 16 des Gehäuses 12.

Vorteilhaft ist hier der modulare Aufbau des Gesamtsystems, der von der reinen Kapselung des gesamten von der Trommelbremse 1 eingenommenen Raums mittels des Abdeckblechs 12 bis zu den als austauschbare Einheiten ausgebildeten Saugrohren 6 und Anschlussschnittstelle 8 variierbar ist.

Durch eine geometrische Abstufung kann beispielsweise auch das Abdeckblech 13 als Sammelbehälter dienen, der den freien Staub über die Schwerkraft an einem einer Fahrbahn nahesten Punkt des Abdeckblechs 13 sammelt.

Durch Anbrigen einer Anschlussschnittstelle 8 an diesem der Fahrbahn nahesten Punkt kann dabei der sich dort sammelnde Bremsstaub abgesaugt werden, so dass er nicht mehr durch den zwischen Abdeckblech 13 und Bremstrommel 2 gegebenen Spalt austreten kann.

Durch das Anbringen mehrerer solcher Anschlussschnittstellen 8 am Umfang des Abdeckblechs 13 erhöht sich die Effektivität des gesamten Systems.

### Bezugszeichenliste

- 1: Trommelbremse

- 2: Bremstrommel
- 21: Mantelinnenfläche
- 22: Aufnahmeraum

- 3: Bremsbacke
- 31: Reibbelag
- 32: Reibbelagträger
- 33: Reibfläche
- 34: Tasche
- 35: Stiftaufnahme

- 4: Zuspanneinrichtung
- 5: Abstreifer
- 51: Saugloch

- 6: Saugrohr
- 61: Ende
- 62: Saugloch

- 7: Balg
- 71: Buchse

- 8: Anschlussschnittstelle

- 9: Führungsstift
- 91: Einsteckstück
- 92: Biegestück

- 10: Ankergehäuse
- 11: Tellerfeder
- 12: Gehäuse
- 13: Abdeckblech
- 14: Unterbaugruppe
- 15: Führungsstift
- 16: Hinterschnitt

- D: Drehachse
- x: Richtung
- y: Richtung
- z: Richtung

## Patentansprüche

1. Trommelbremse (1), insbesondere für ein Nutzfahrzeug, aufweisend
- eine um eine Drehachse (D) drehbar gelagerte Bremstrommel (2),
- mehrere in einem Aufnahmeraum (22) der Bremstrommel (2) gelagerte Bremsbeläge (3) mit einem jeweiligen Reibbelagträger (32) und einem an diesem angeordneten Reibbelag (31),
- eine an einem Ankergehäuse (10) drehfest angeordnete Zuspanneinrichtung (4), mit der die Bremsbeläge (3) an eine als Reibfläche ausgebildete Mantelinnenfläche (21) der Bremstrommel (2) anpressbar sind,
**dadurch gekennzeichnet, dass**
- an oder nahe jedem der Bremsbeläge (3) entlang zumindest eines Teilstücks eines Umfangsrandes des jeweiligen Reibbelags (31) ein an eine Saugeinrichtung anschließbares Saugrohr (6) angeordnet ist.

2. Trommelbremse (1) nach Anspruch 1, **dadurch gekennzeichnet, dass** an jedem der Bremsbeläge (3) ein Saugrohr (6) angeordnet ist, das mit einer Reibfläche (33) des jeweiligen Bremsbelags (2) abschließt und beim Andrücken der Bremsbeläge (3) zusammen mit der Reibfläche (33) der Bremsbeläge (3) an der Mantelinnenfläche (21) der Bremstrommel (2) anliegt.

3. Trommelbremse (1) nach Anspruch 1, **dadurch gekennzeichnet, dass** mindestens ein Saugrohr (6) nahe eines Seitenrandes (23) der Mantelinnenfläche (21) der Bremstrommel (2) zugewandt unterhalb eines Abdeckblechs (13) des Gehäuses (12) der Trommelbremse (1) angeordnet ist.

4. Trommelbremse (1) nach einem der vorstehenden Ansprüche, **dadurch gekennzeichnet, dass** wenigstens ein Ende (61) des jeweiligen Saugrohrs (6) mit einer Anschlussschnittstelle (8) zum Anschluß an die Saugeinrichtung verbunden ist.

5. Trommelbremse (1) nach Anspruch 4, **dadurch gekennzeichnet, dass** beide Enden (61) des Saugrohrs (6) mit der Anschlussschnittstelle (8) verbunden sind.

6. Trommelbremse (1) nach Anspruch 4, **dadurch gekennzeichnet, dass** genau eines der Enden (61) des Saugrohrs (61) mit der Anschlussschnittstelle (8) verbunden ist.

7. Trommelbremse (1) nach einem der Ansprüche 3 bis 5, **dadurch gekennzeichnet, dass** die Anschlussschnittstelle (8) als Tülle ausgebildet ist.

8. Trommelbremse (1) nach einem der vorstehenden Ansprüche, **dadurch gekennzeichnet, dass** am Saugrohr (6) Führungsstifte (9) angebracht sind, die in Tellerfedern (11) einseitig verschiebbar gelagert sind.

9. Trommelbremse (1) nach Anspruch 8, **dadurch gekennzeichnet, dass** die Tellerfedern (11) in jeweiligen Taschen (34) im Reibbelagträger (32) des Reibbelags (3) in Achsrichtung der Führungsstifte (9) fixiert sind.

10. Trommelbremse (1) nach Anspruch 8 oder 9, **dadurch gekennzeichnet, dass** ein Formschluss zwischen Führungsstift (9) und Tellerfeder (11) so ausgelegt ist, dass der Führungsstift (9) in Richtung seiner Längsachse durch die Tellerfeder (11), mittels der Anpresskraft der Bremsbeläge (3), unidirektional in Verschleißrichtung und planparallel zur Reibfläche (33) der Bremsbeläge (3), verschiebbar ist.

11. Trommelbremse (1) nach einem der vorstehenden Ansprüche, **dadurch gekennzeichnet, dass** das Saugrohr (6) am Reibbelag (3) als austauschbare Einheit befestigt ist.

12. Trommelbremse (1) nach einem der Ansprüche 4 bis 11, **dadurch gekennzeichnet, dass** die wenigstens eine Anschlussschnittstelle (8) als austauschbare Einheit an dem Abdeckblech (13) des Gehäuses (12) der Trommelbremse (1) befestigt ist.

13. Trommelbremse (1) nach einem der vorstehenden Ansprüche, **dadurch gekennzeichnet, dass** das Saugrohr (6) zumindest teilflächig mit einem Abstreifer (5) ummantelt ist.

14. Trommelbremse (1) nach Anspruch 13, **dadurch gekennzeichnet, dass** der Abstreifer (5) aus einem hochfesten, temperaturbeständigen Gewebe besteht.

15. Trommelbremse (1) nach Anspruch 14, **dadurch gekennzeichnet, dass** das Gewebe des Abstreifers (5) ein Glasfaser-, CFC-, Silikat- oder Keramikgewebe mit einer Temperaturbeständigkeit von mehr als 650°C, bevorzugt bis zu 1200°C ist.

16. Trommelbremse (1) nach einem der vorstehenden Ansprüche 1 bis 12, **dadurch gekennzeichnet, dass** das Saugrohr (6) zumindest teilflächig mit einer Keramikbeschichtung versehen ist.

17. Trommelbremse (1) nach einem der vorstehenden Ansprüche, **dadurch gekennzeichnet, dass** an dem Saugrohr (6) Abstandshalter befestigt sind.

18. Trommelbremse (1) nach einem der vorstehenden Ansprüche, **dadurch gekennzeichnet, dass** das Saugrohr (6) Absaugöffnungen (61) aufweist, die mit einem geringen Spalt zur Kontaktfläche des Reibbelags (31) zur Mantelinnenfläche (21) der Bremstrommel (2) angebracht sind.

19. Trommelbremse (1) nach einem der vorstehenden Ansprüche, **dadurch gekennzeichnet, dass** das Saugrohr (6) über ein Längen-, Höhen- und Winkelausgleichselement mit der Anschlussschnittstelle (8) verbunden ist.

20. Trommelbremse (1) nach Anspruch 19, **dadurch gekennzeichnet, dass** die Schnittstelle als flexibler Balg (7) ausgebildet ist.

21. Trommelbremse (1) nach Anspruch 20, **dadurch gekennzeichnet, dass** der Balg (7) als Metallfaltenbalg ausgebildet ist.

22. Trommelbremse (1) nach Anspruch 20 oder 21, **dadurch gekennzeichnet, dass** zur Befestigung des Saugrohrs (6) am Balg (7) einerseits und des Balgs (7) in der Anschlussschnittstelle (8) andererseits eine geschlitzte Buchse (71) in den Verbindungsenden des Balgs (7) derart umspritzt ist, dass das die geschlitzte Buchse (71) ummantelnde Material, bevorzugt NBR oder Silikon, eine Abdichtung der Anschlüsse Saugrohr (6) zu Balg (7) und Anschlussschnittstelle (8) zu Balg (7) bildet.

## Claims

1. Drum brake (1), in particular for a utility vehicle, having
- a brake drum (2) which is rotatably supported about an axis of rotation (D),
- multiple brake linings (3) which are supported in a receiving space (22) of the brake drum (2) and which have a respective friction lining carrier (32) and a brake lining (31) which is arranged thereon,
- an application apparatus (4) which is arranged on an anchor housing (10) in a rotationally secure manner and by means of which the brake linings (3) can be pressed against a covering interior face (21) of the brake drum (2) which is in the form of a friction face,
**characterized in that**
- on or close to each of the brake linings (3) along at least a part-piece of a circumferential edge of the respective friction lining (31) a suction pipe (6) which can be connected to a suction apparatus is arranged.

2. Drum brake (1) according to claim 1, **characterized in that** there is arranged on each of the brake linings (3) a suction pipe (6) which terminates with a friction face (33) of the respective brake lining (2) and, when the brake linings (3) are pressed together with the friction face (33) of the brake linings (3), bears on the covering interior face (21) of the brake drum (2).

3. Drum brake (1) according to claim 1, **characterized in that** at least one suction pipe (6) is arranged close to a side edge (23) of the covering interior face (21) facing the brake drum (2) below a cover sheet (13) of the housing (12) of the drum brake (1).

4. Drum brake (1) according to any one of the preceding claims, **characterized in that** at least one end (61) of the respective suction pipe (6) is connected to a connection interface (8) for connection to the suction apparatus.

5. Drum brake (1) according to claim 4, **characterized in that** both ends (61) of the suction pipe (6) are connected to the connection interface (8).

6. Drum brake (1) according to claim 4, **characterized in that** precisely one of the ends (61) of the suction pipe (61) is connected to the connection interface (8).

7. Drum brake (1) according to any one of claims 3 to 5, **characterized in that** the connection interface (8) is in the form of a socket.

8. Drum brake (1) according to any one of the preceding claims, **characterized in that** there are fitted to the suction pipe (6) guiding pins (9) which are displaceably supported at one side in cup springs (11).

9. Drum brake (1) according to claim 8, **characterized in that** the cup springs (11) are fixed in respective pockets (34) in the friction lining carrier (32) of the friction lining (3) in an axial direction of the guiding pins (9).

10. Drum brake (1) according to claim 8 or 9, **characterized in that** a positive-locking connection between the guiding pin (9) and cup spring (11) is configured in such a manner that the guiding pin (9) can be displaced in the direction of its longitudinal axis thereof by the cup spring (11), by means of the pressing force of the brake linings (3) unidirectionally in a closure direction and plane-parallel with the friction face (33) of the brake linings (3).

11. Drum brake (1) according to any one of the preceding claims, **characterized in that** the suction pipe (6) is secured to the friction lining (3) as a replaceable unit.

12. Drum brake (1) according to any one of claims 4 to 11, **characterized in that** the at least one connection interface (8) is secured as a replaceable unit to the cover sheet (13) of the housing (12) of the drum brake (1).

13. Drum brake (1) according to any one of the preceding claims, **characterized in that** the suction pipe (6) is covered with a scraper (5) at least in some areas.

14. Drum brake (1) according to claim 13, **characterized in that** the scraper (5) consists of a high-strength, temperature-resistant woven fabric.

15. Drum brake (1) according to claim 14, **characterized in that** the woven fabric of the scraper (5) is a glass fiber, CFC, silicate or ceramic woven fabric with a temperature resistance of more than 650°C, preferably up to 1200°C.

16. Drum brake (1) according to any one of the preceding claims 1 to 12, **characterized in that** the suction pipe (6) is provided with a ceramic coating at least in some areas.

17. Drum brake (1) according to any one of the preceding claims, **characterized in that** spacers are secured to the suction pipe (6).

18. Drum brake (1) according to any one of the preceding claims, **characterized in that** the suction pipe (6) has suction openings (61) which are fitted with a small gap with respect to the contact face of the friction lining (31) relative to the covering interior face (21) of the brake drum (2).

19. Drum brake (1) according to any one of the preceding claims, **characterized in that** the suction pipe (6) is connected to the connection interface (8) by means of a length, height and angle compensation element.

20. Drum brake (1) according to claim 19, **characterized in that** the interface is in the form of a flexible bellows (7).

21. Drum brake (1) according to claim 20, **characterized in that** the bellows (7) is in the form of a metal bellows.

22. Drum brake (1) according to claim 20 or 21, **characterized in that** in order to secure the suction pipe (6) to the bellows (7) on the one hand and the bellows (7) in the connection interface (8) on the other hand a slotted bush (71) in the connection ends of the bellows (7) is overmolded in such a manner that the material which surrounds the slotted bush (71), preferably NBR or silicone, forms a sealing of the connections of the suction pipe (6) to the bellows (7) and the connection interface (8) to the bellows (7).

## Revendications

1. Frein à tambour (1), en particulier pour un véhicule utilitaire, présentant
- un tambour de frein (2) logé de manière rotative autour d'un axe de rotation (D),
- plusieurs garnitures de frein (3) logées dans un espace de réception (22) du tambour de frein (2) avec un support de garniture de friction (32) respectif et une garniture de friction (31) agencée sur celui-ci,
- un dispositif de serrage (4) agencé sans pouvoir tourner au niveau d'un boîtier d'ancrage (10), avec lequel les garnitures de frein (3) peuvent être pressées contre une surface intérieure enveloppe (21) formée comme surface de friction du tambour de frein (2),
**caractérisé en ce que**
- un tube d'aspiration (6) pouvant être raccordé à un dispositif d'aspiration est agencé au niveau ou près de chacune des garnitures de frein (3) le long d'au moins un tronçon d'un bord périphérique de la garniture de friction (31) respective.

2. Frein de tambour (1) selon la revendication 1, **caractérisé en ce qu'**un tube d'aspiration (6) est agencé au niveau de chacune des garnitures de frein (3), tube qui se termine par une surface de friction (33) de la garniture de frein (2) respective et repose lors du pressage des garnitures de frein (3) conjointement avec la surface de friction (33) des garnitures de frein (3) contre la surface intérieure enveloppe (21) du tambour de frein (2).

3. Frein de tambour (1) selon la revendication 1, **caractérisé en ce qu'**au moins un tube d'aspiration (6) est agencé tourné près d'un bord latéral (23) de la surface intérieure enveloppe (21) du tambour de frein (2) en dessous d'une tôle de recouvrement (13) du boîtier (12) du frein de tambour (1).

4. Frein de tambour (1) selon l'une quelconque des revendications précédentes, **caractérisé en ce qu'**au moins une extrémité (61) du tube d'aspiration (6) respectif est reliée à une interface de raccordement (8) pour le raccordement au dispositif d'aspiration.

5. Frein de tambour (1) selon la revendication 4, **caractérisé en ce que** les deux extrémités (61) du tube d'aspiration (6) sont reliées à l'interface de raccordement (8).

6. Frein de tambour (1) selon la revendication 4, **caractérisé en ce que** précisément l'une des extrémités (61) du tube d'aspiration (61) est reliée à l'interface de raccordement (8).

7. Frein de tambour (1) selon l'une quelconque des revendications 3 à 5, **caractérisé en ce que** l'interface de raccordement (8) est formé comme une douille.

8. Frein de tambour (1) selon l'une quelconque des revendications précédentes, **caractérisé en ce que** des tiges de guidage (9) sont montées au niveau du tube d'aspiration (6), tiges qui sont logées de manière mobile d'un côté dans des rondelle-ressorts (11).

9. Frein de tambour (1) selon la revendication 8, **caractérisé en ce que** les rondelle-ressorts (11) sont fixées dans des poches (34) respectives dans le support de garniture de friction (32) de la garniture de friction (3) dans le sens axial des tiges de guidage (9).

10. Frein de tambour (1) selon la revendication 8 ou 9, **caractérisé en ce qu'**une liaison à complémentarité de formes entre la tige de guidage (9) et la rondelle-ressort (11) est conçue de sorte que la tige de guidage (9) soit mobile en direction de son axe longitudinal par la rondelle-ressort (11), au moyen de la force de pressage des garnitures de frein (3), de manière unidirectionnelle dans le sens d'usure et parallélépipédique à la surface de friction (33) des garnitures de frein (3).

11. Frein de tambour (1) selon l'une quelconque des revendications précédentes, **caractérisé en ce que** le tube d'aspiration (6) est fixé à la garniture de friction (3) comme unité interchangeable.

12. Frein de tambour (1) selon l'une quelconque des revendications 4 à 11, **caractérisé en ce que** l'au moins une interface de raccordement (8) est fixée comme unité interchangeable à la tôle de recouvrement (13) du boîtier (12) du frein de tambour (1).

13. Frein de tambour (1) selon l'une quelconque des revendications précédentes, **caractérisé en ce que** le tube d'aspiration (6) est enveloppé au moins sur la surface partielle avec une racle (5).

14. Frein de tambour (1) selon la revendication 13, **caractérisé en ce que** la racle (5) se compose d'un tissu à haute résistance, thermorésistant.

15. Frein de tambour (1) selon la revendication 14, **caractérisé en ce que** le tissu de la racle (5) est un tissu en fibre de verre, CFC, silicate ou céramique avec une thermorésistance de plus de 650 °C, de préférence jusqu'à 1200 °C.

16. Frein de tambour (1) selon l'une quelconque des revendications précédentes 1 à 12, **caractérisé en ce que** le tube d'aspiration (6) est pourvu au moins sur la surface partielle d'un revêtement en céramique.

17. Frein de tambour (1) selon l'une quelconque des revendications précédentes, **caractérisé en ce que** des entretoises sont fixées au tube d'aspiration (6).

18. Frein de tambour (1) selon l'une quelconque des revendications précédentes, **caractérisé en ce que** le tube d'aspiration (6) présente des ouvertures d'aspiration (61) qui sont montées avec une petite fente par rapport à la surface de contact de la garniture de friction (31) avec la surface intérieure enveloppe (21) du tambour de frein (2).

19. Frein de tambour (1) selon l'une quelconque des revendications précédentes, **caractérisé en ce que** le tube d'aspiration (6) est relié à l'interface de raccordement (8) par le biais d'un élément de compensation de longueur, de hauteur et d'angle.

20. Frein de tambour (1) selon la revendication 19, **caractérisé en ce que** l'interface est formée comme un soufflet flexible (7).

21. Frein de tambour (1) selon la revendication 20, **caractérisé en ce que** le soufflet (7) est formé comme soufflet métallique.

22. Frein de tambour (1) selon la revendication 20 ou 21, **caractérisé en ce que** pour la fixation du tube d'aspiration (6) au soufflet (7) d'une part et du soufflet (7) dans l'interface de raccordement (8) d'autre part, une douille fendue (71) dans les extrémités de liaison du soufflet (7) est enrobée de telle manière que le matériau enveloppant la douille fendue (71), de préférence du NBR ou silicone, forme une étanchéité des raccords tube d'aspiration (6) au soufflet (7) et interface de raccordement (8) au soufflet (7).
